# DEMANDE DE BREVET EUROPEEN

(11) **EP 1 231 742 A1**
(43) Date de publication de la demande: **14.08.2002**
(21) Numéro de dépôt: 02290246.4
(22) Date de dépôt: 04.02.2002
(51) Int. Cl.: H04L 12/28, H04L 12/56, H04Q 7/38

(54) **Procédé pour l'optimisation de transfert de données dans un système cellulaire de radiocommunications mobiles**

(30) Priorité: 08.02.2001 FR 0101707
(71) Demandeur: ALCATEL, 75008 Paris (FR)
(72) Inventeur: Muniere, Vincent, 75015 Paris (FR)
(74) Mandataire: El Manouni, Josiane

(57) **Abrégé**

Procédé pour l'optimisation de transfert de données dans un système cellulaire de radiocommunications mobiles, lors de mise en oeuvre, dans ledit système, de toute procédure susceptible de perturber ledit transfert de données, ce procédé étant essentiellement caractérisé en ce que ledit transfert de données est poursuivi lors de mise en oeuvre de telle procédure, avec une taille réduite pour les unités de données de protocole de communication radio transférées.

## Description

La présente invention concerne d'une manière générale les systèmes cellulaires de radiocommunications mobiles.

La présente invention concerne plus particulièrement les services en mode paquet, tels que notamment le GPRS (pour "General Packet Radio Service" en anglais) pour les systèmes de radiocommunications mobiles de type GSM (pour "Global System for Mobile communications" en anglais).

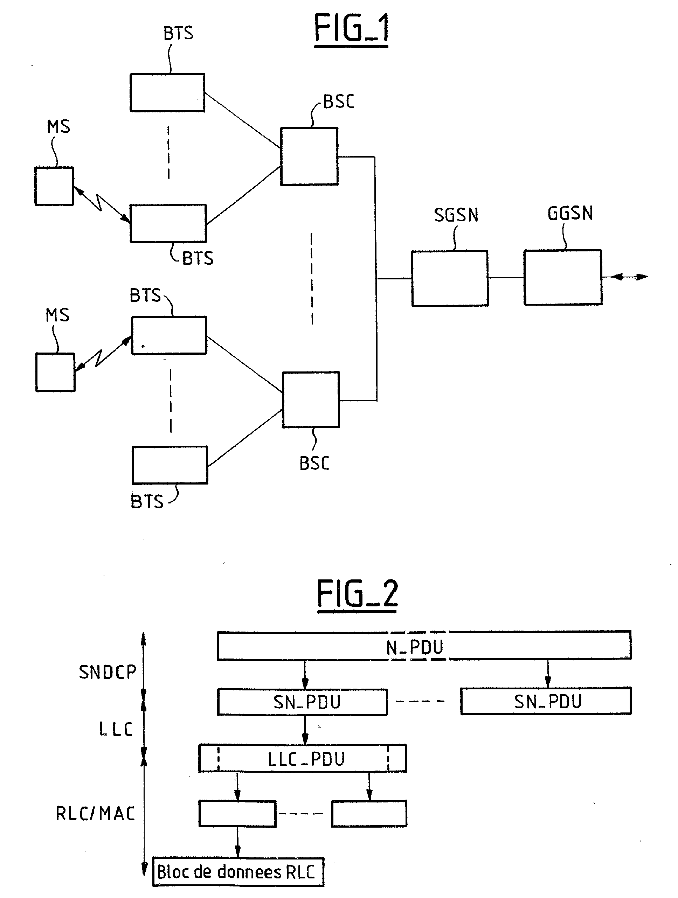

L'architecture des systèmes de type GPRS est rappelée sur la figure 1, elle comporte essentiellement :
- des stations de base ou BTS (pour "Base Transceiver Station" en anglais), en relation avec des stations mobiles ou MS (pour « Mobile Station » en anglais), et des contrôleurs de stations de base ou BSC (pour "Base Station Controller" en anglais), l'ensemble formé par les BTS et BSC étant aussi appelé BSS (pour "Base Station Subsystem" en anglais),
- des entités telles que les entités SGSN (pour "Serving GPRS Support Node" en anglais), en relation d'une part avec le BSS, et d'autre part avec des entités GGSN (pour « Gateway GPRS Support Node » en anglais), elles-mêmes en relation avec des réseaux extérieurs (non illustrés).

Selon l'architecture en couches utilisée dans ces systèmes, on distingue, sur l'interface entre MS et BSS (ou interface Um):
- une première couche, ou couche physique,
- une deuxième couche, ou couche liaison de données, elle-même divisée en plusieurs couches: par ordre de niveaux croissants, MAC (pour « Médium Access Control » en anglais) et RLC (pour « Radio Link Control » en anglais).

De même, on distingue, sur l'interface entre BSS et SGSN (ou interface Gb):
- une première couche, ou couche physique,
- une deuxième couche, ou couche liaison de données, elle-même divisée en plusieurs couches : par ordre de niveaux croissants, « Frame Relay » (en anglais) ou « IP/UDP », NS (pour « Network Service » en anglais), BSSGP (pour « BSS GPRS Protocol» en anglais).

En outre, dans les entités MS et SGSN, la couche LLC permet d'établir une connection logique de niveau deux transparente au BSS; de plus, une couche spécifique appelée SNDCP (pour « Sub-Network Dependent Convergence Protocol » en anglais) permet de passer d'un protocole de niveau supérieur (ou protocole de troisième couche, ou couche réseau), au protocole de deuxième couche du GPRS.

Notamment, la couche SNDCP segmente des unités de données de protocole de couche réseau, ou paquets, ou encore N-PDU (pour « Network layer - Protocol Data Units » en anglais) en unités de données appelées SN-PDU (pour « SN-Protocol Data Units » en anglais), comme rappelé sur la figure 2.

Des trames appelées trames LLC (ou « LLC frames » en anglais) sont ensuite formées, dans la couche LLC, à partir des unités de données SN-PDU. Dans les trames LLC les unités de données SN-PDU prennent alors le nom d'unités de données LLC-PDU (pour « LLC-Protocol Data Units » en anglais).

Les unités de données LLC-PDU sont ensuite segmentées dans la couche RLC/MAC, de manière à former des blocs appelés blocs de données RLC (ou « RLC data blocks » en anglais). Les blocs de données RLC sont ensuite mis au format requis pour transmission sur l'interface Um, dans la couche physique.

En outre, dans les couches RLC et LLC sont mises en oeuvre des procédures de re-transmission de données non correctement reçues (blocs de données RLC ou unités de données LLC-PDU selon le cas), selon une technique appelée aussi ARQ (pour "Automatic Repeat reQuest" en anglais). L'état, correct ou non, des blocs ou unités de données reçus est signalé par le récepteur à l'émetteur au moyen de messages dits d'acquittement (ou ACK, pour "ACKnowledgment" en anglais) ou de non-acquittement (ou NACK, pour "Non-ACKnowledgment" en anglais).

En outre, des protocoles de signalisation de niveau supérieur sont également prévus, notamment pour la gestion des ressources radio ou GRR (pour « GPRS Radio Resource Management » en anglais), la gestion de la mobilité ou GMM (pour « GPRS Mobility Management» en anglais), la gestion de session ou SM (pour « Session Management» en anglais), ...etc.

Pour une description plus détaillée de ces systèmes, on pourra se référer aux normes correspondantes, publiées par les organismes de normalisation correspondants.

Par ailleurs, ces systèmes ont une architecture cellulaire, et des techniques de transfert inter-cellulaire (ou "handover" en anglais) sont prévues pour transférer les communications en mode circuit de cellule à cellule selon les besoins.

Pour les services en mode paquet, on utilise généralement une procédure dite de re-sélection de cellule, et on distingue généralement plusieurs modes de contrôle de re-sélection de cellule, correspondant à des degrés d'autonomie décroissants de la station mobile, ou, ce qui revient au même, à des degrés de contrôle croissants par le réseau. Par exemple, dans le cas du GPRS, comme spécifié dans la norme 3GPP TS 04.60 V8.7.0 (2000-11) publiée par le 3GPP (« 3^{rd} Generation Partnership Project »):
- Suivant un premier mode de contrôle (appelé aussi NC0), la station mobile décide de manière autonome d'effectuer un tel transfert et sélectionne elle-même la cellule cible vers laquelle la communication est à transférer, en tenant compte des résultats de mesures qu'elle effectue.
- Suivant un deuxième mode de contrôle ( appelé aussi NC1), la station mobile décide de manière autonome d'effectuer un tel transfert et sélectionne elle-même la cellule cible vers laquelle la communication est à transférer, en tenant compte de résultats de mesures qu'elle effectue, et transmet par ailleurs les résultats de ces mesures au réseau.
- Suivant un troisième mode de contrôle (appelé aussi NC2), le réseau décide d'effectuer un tel transfert et sélectionne la cellule cible vers laquelle la communication est à transférer, en tenant compte des résultats de mesures que lui transmet la station mobile.

Une fois que la cellule cible vers laquelle transférer la communication en cours a été sélectionnée, suivant l'un ou l'autre de ces modes de contrôle, se pose le problème de l'accès par la station mobile, en mode paquet, à cette cellule cible.

Il est pour cela nécessaire que la station mobile acquière certaines informations appelées aussi informations système (ou « system information » en anglais), diffusées sur un canal commun dans cette cellule cible, ce canal commun pouvant être, comme spécifié également dans le document précité, le canal PBCCH (pour « Packet Broadcast Control Channel » en anglais) ou le canal BCCH (pour « Broadcast Control Channel » en anglais). Dans le cas où le canal PBCCH est utilisé, ces informations système sont appelées informations système paquet (ou « Packet system information » en anglais). Ces informations système incluent notamment des informations indiquant à la station mobile comment accéder en mode paquet à cette cellule cible. En effet, contrairement à la procédure de « handover » prévue dans le cas du mode circuit, les ressources à utiliser dans la cellule cible ne sont pas prédéterminées par le réseau. Ces informations système incluent un certain nombre de paramètres permettant de configurer la re-sélection de cellule. Un certain nombre d'informations système sont nécessaires avant que la station mobile ne soit autorisée à faire un accès dans la cellule cible et diffèrent selon qu'elles sont transportées sur le canal PBCCH ou le BCCH.

Or le mode de diffusion de ces informations système nécessaires, sur le canal PBCCH ou BCCH, est tel que le temps d'acquisition de ces informations par la station mobile peut être extrêmement long, et n'est en outre pas pré-déterminé. Le transfert de données dans le sens descendant peut alors s'en trouver affecté. En effet, le SGSN continue à transférer des unités de données LLC-PDU au BSS qui tente de les délivrer à la station mobile sous forme de blocs de données RLC. Mais comme la station mobile est en train d'acquérir les informations système relatives à la cellule cible, beaucoup de blocs de données RLC seront perdus, c'est-à-dire ne seront pas reçus par la station mobile. En effet, comme spécifié dans la norme précitée, la station mobile est alors autorisée à suspendre les opérations en cours dans l'ancienne cellule, pendant la durée nécessaire, afin de recevoir les messages requis sur le BCCH ou PBCCH de la cellule cible. De nombreuses re-transmissions peuvent alors être nécessaires au niveau de la couche RLC/MAC et/ou de la couche LLC, ce qui a essentiellement pour inconvénients de retarder le transfert de données (et donc de dégrader la qualité de service), et de ne pas correspondre à une utilisation optimale des ressources radio.

Pour limiter ces inconvénients, selon la norme 3GPP TS 08.18 V8.7.0 (2000-11) publiée par le 3GPP, dans le cas où le BSS a ordonné une re-sélection de cellule à une station mobile (cas de la procédure NC2), les étapes suivantes sont mises en oeuvre:
- la couche GMM fournit une primitive de service « GMM-RADIO-STATUS.req » à la couche BSSGP pour lui demander d'envoyer un message « RADIO-STATUS PDU » au SGSN,
- le message « RADIO-STATUS PDU » est transmis par le BSS, via la couche BSSGP, au SGSN, afin d'informer ce dernier qu'une re-sélection de cellule a été ordonnée par le réseau,
- la couche BSSGP dans le SGSN fournit alors une primitive de service « GMM-RADIO-STATUS.ind » à la couche GMM pour lui signaler qu'une re-sélection de cellule a été ordonnée par le BSS,
- le SGSN suspend alors le transfert d'unités de données LLC-PDU dans le sens descendant (vers la station mobile) en envoyant une primitive de service « LLGMM-SUSPEND-REQ » à la couche LLC,
- lorsqu'un message de mise à jour de cellule est reçu de la station mobile, indiquant que la re-sélection de cellule a été effectuée avec succès, le SGSN transmet alors un message de signalisation appelé « FLUSH-LL PDU » à l'entité contrôlant l'ancienne cellule,
- après effacement des unités de données LLC-PDU reçues par l'entité contrôlant l'ancienne cellule avant de transmettre le message « RADIO STATUS PDU », et non encore acquittées si LLC fonctionne en mode acquitté, ou après transfert de ces unités de données à l'entité contrôlant la nouvelle cellule, un message appelé « FLUSH LL-ACK PDU » est transmis au SGSN,
- la couche GMM du SGSN envoie alors une primitive de service « LLGMM-RESUME-REQ » à la couche LLC pour que le transfert d'unités de données LLC-PDU dans le sens descendant reprenne.

Une telle solution a cependant essentiellement pour inconvénient de suspendre le transfert de données pour une durée incontrôlée, du fait du processus de re-sélection de cellule qui peut être extrêmement long et dont la durée n'est pas pré-déterminée. Ceci peut entraîner une expiration de délais (ou « timers » en anglais) au niveau des couches supérieures reposant sur la couche LLC, d'où également une dégradation de la qualité de service. Ceci peut aussi déclencher inutilement certaines re-transmissions au niveau de la couche LLC, d'où également une dégradation de la qualité de service, ainsi qu'une utilisation non optimale des ressources radio.

La présente invention a notamment pour but d'éviter dans la mesure du possible les divers inconvénients précités. La présente invention est applicable à toute procédure mise en oeuvre dans ledit système et susceptible de perturber le transfert de données, la procédure de re-sélection de cellule mentionnée précédemment n'étant qu'un exemple de telle procédure.

Un objet de la présente invention est ainsi un procédé pour l'optimisation de transfert de données dans un système cellulaire de radiocommunications mobiles, lors de mise en oeuvre, dans ledit système, de toute procédure susceptible de perturber ledit transfert de données, ce procédé étant essentiellement caractérisé en ce que ledit transfert de données est poursuivi lors de mise en oeuvre de telle procédure, avec une taille réduite pour les unités de données de protocole de communication radio transférées.

Suivant une autre caractéristique, ladite procédure est une procédure de re-sélection de cellule.

Suivant une autre caractéristique, ledit système est de type GPRS, et lesdites unités de données de protocole de communication radio sont constituées par des unités de données de type LLC-PDU (pour « Logical Link Control- Protocol Data Unit » en anglais), obtenues notamment par segmentation d'unités de protocole de niveau supérieur, de type N-PDU (pour « Network layer - Protocol Data Unit » en anglais).

Un autre objet de la présente invention est une entité de réseau de radiocommunications mobiles, cette entité étant essentiellement caractérisée en ce qu 'elle comporte, pour mettre en oeuvre un tel procédé:
- des moyens pour transférer des unités de données de protocole de communication radio de taille réduite, lors de mise en oeuvre de telle procédure.

Suivant une autre caractéristique, ledit réseau étant de type GPRS, et lesdites unités de données de protocole de communication radio étant constituées par des unités de données de type LLC-PDU (pour « Logical Link Control- Protocol Data Unit » en anglais), obtenues notamment par segmentation d'unités de protocole de niveau supérieur, de type N-PDU (pour « Network layer - Protocol Data Unit » en anglais), ladite entité comporte en outre :
- des moyens pour segmenter lesdites unités de données de protocole de niveau supérieur en unités de données de protocole de communication radio de taille réduite, lors de mise en oeuvre de telle procédure.

Suivant une autre caractéristique ladite entité est de type SGSN (pour « Serving GPRS Support Node » en anglais).

Un autre objet de la présente invention est une station mobile, cette station mobile étant essentiellement caractérisée en ce qu'elle comporte, pour mettre en oeuvre un tel procédé:
- des moyens pour recevoir des unités de données de protocole de communication radio de taille réduite, lors de mise en oeuvre de telle procédure.

Suivant une autre caractéristique, ledit système étant de type GPRS, et lesdites unités de données de protocole de communication radio étant constituées par des unités de données de type LLC-PDU (pour « Logical Link Control- Protocol Data Unit » en anglais), obtenues notamment par segmentation d'unités de données de protocole de niveau supérieur, de type N-PDU (pour « Network layer - Protocol Data Unit » en anglais), ladite station mobile comporte en outre:
- des moyens pour ré-assembler en unités de données de protocole de niveau supérieur, lesdites unités de données de protocole de communication radio de taille réduite, lors de mise en oeuvre de telle procédure.

D'autres objets et caractéristiques de la présente invention apparaîtront à la lecture de la description suivante d'exemples de réalisation, faite en relation avec les dessins ci-annexés dans lesquels:
- la figure 1 (décrite précédemment) est un schéma destiné à rappeler l'architecture générale d'un système cellulaire de radiocommunications mobiles de type GPRS,
- la figure 2 (décrite précédemment) est un schéma destiné à rappeler le principe de formation des différentes unités ou blocs de données traitées dans un tel système,
- la figure 3 est un schéma destiné à illustrer un exemple de procédé suivant l'invention.

La présente invention a donc pour objet un procédé pour l'optimisation de transfert de données dans un système cellulaire de radiocommunications mobiles, lors de mise en oeuvre, dans ledit système, de toute procédure suceptible de perturber ledit transfert de données.

Suivant l'invention, ledit transfert de données est poursuivi lors de mise en oeuvre de telle procédure, avec une taille réduite pour les unités de données de protocole de communication radio transférées.

A titre d'exemple, dans ce qui suit, ladite procédure est une procédure de re-sélection de cellule.

En outre, la présente invention sera plus particulièrement décrite, dans ce qui suit, à titre d'exemple pour un système de type GPRS. Lesdites unités de données de protocole de communication radio sont alors constituées par des unités de données de type LLC-PDU, obtenues notamment par segmentation d'unités de données de type N-PDU, par la couche SNDCP, comme rappelé précédemment.

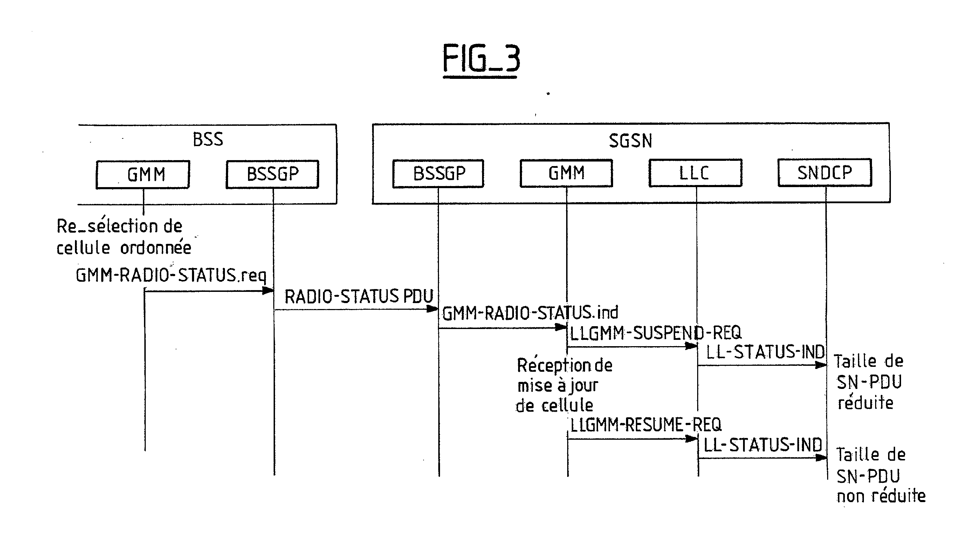

Dans cet exemple, lors de re-sélection de cellule, le SGSN continue le transfert d'unités de données LLC-PDU, mais ces unités de données ont alors une taille réduite. Comme la couche LLC ne segmente pas les unités de données SN-PDU en unités de données LLC-PDU, les unités de données SN-PDU doivent elles-mêmes être fournies avec une taille réduite à la couche LLC. Il est pour cela nécessaire d'informer la couche SNDCP de cette re-sélection de cellule. A titre d'exemple, pour le cas de re-sélection de cellule ordonnée par le réseau (correspondant au mode de contrôle NC2 tel que rappelé précédemment), on pourra utiliser les étapes illustrées sur la figure 3, mises en oeuvre dans le SGSN sur réception d'un message « RADIO-STATUS PDU» informant le SGSN qu'une re-sélection de cellule a été ordonnée par le réseau.

L'exemple de la figure 3 est basé sur une ré-utilisation de certaines primitives de service prévues entre les différentes couches de protocole du BSS et du SGSN. Une telle ré-utilisation est obtenue en spécifiant le nouveau type de service (correspondant à l'utilisation faite suivant l'invention) dans les paramètres caractéristiques de ces primitives. Une telle ré-utilisation permet essentiellement d'obtenir les avantages recherchés au moyen du procédé suivant l'invention, sans modification substantielle du système.

Dans cet exemple, les primitives suivantes sont ainsi ré-utilisées:
- « GMM-RADIO-STATUS.req », définie dans la norme 3GPP TS 08.18 V8.7.0 (2000-11), fournie par la couche GMM (pour « GPRS Mobility Management » en anglais) à la couche BSSGP, et permettant de demander à la couche BSSGP d'envoyer un message « RADIO-STATUS PDU » au SGSN,
- « GMM-RADIO-STATUS.ind », définie dans la norme 3GPP TS 08.18 V8.7.0 (2000-11), fournie par la couche BSSGP à la couche GMM, et permettant d'informer la couche GMM du fait qu'un message « RADIO-STATUS PDU » a été reçu du BSS
   (On notera que les deux primitives ci-dessus contiennent un message « RADIO-STATUS PDU » dont la valeur dite « de cause radio » est : « Re-sélection de cellule commandée ». La présente invention ne nécessite pas de changement dans l'utilisation de ces primitives),
- « LLGMM-SUSPEND-REQ », définie dans la norme 3GPP TS 24.007 V3.6.0 (2000-12), fournie par la couche GMM à la couche LLC, et permettant de demander à la couche LLC de suspendre le transfert LLC en cours dans le sens descendant ; la présente invention propose d'utiliser cette primitive pour demander à la couche LLC de poursuivre son transfert dans le sens descendant mais avec des unités de données LLC-PDU de taille réduite,
- « LLGMM-RESUME-REQ », définie dans la norme 3GPP TS 24.007 V3.6.0 (2000-12), fournie par la couche GMM à la couche LLC, et permettant de demander à la couche LLC de reprendre le transfert LLC en cours dans le sens descendant,
- « LL-STATUS-IND », définie dans la norme 3GPP TS 24.007 V3.6.0 (2000-12), fournie par la couche LLC à la couche SNDCP, et permettant d'informer la couche SNDCP de défauts ou erreurs dans les couches inférieures ; la présente invention propose d'utiliser cette primitive pour demander à la couche SNDCP de segmenter les unités de données N-PDU en unités de données de taille réduite ou de reprendre un mode d'opération normal.

Ainsi, dans l'exemple illustré sur la figure 3:
- lorsque le BSS décide d'une re-sélection de cellule, la couche GMM fournit une primitive de service « GMM-RADIO-STATUS.req » à la couche BSSGP qui envoie alors le message « RADIO-STATUS PDU» au SGSN,
- à la réception du message « RADIO-STATUS PDU» informant le SGSN d'une re-sélection de cellule ordonnée par le BSS, la couche BSSGP fournit une primitive de service « GMM RADIO-STATUS.ind » à la couche GMM, cette primitive comportant des paramètres caractéristiques permettant d'informer l'entité GMM du fait qu'une re-sélection de cellule a été ordonnée par le réseau,
- une primitive de service « LLGMM-SUSPEND-REQ » est alors fournie par l'entité GMM à la couche LLC, cette primitive comportant des paramètres caractéristiques permettant d'informer la couche LLC du fait que les unités de données LLC-PDU doivent alors être de taille réduite,
- une primitive de service « LL-STATUS-IND » est alors fournie par la couche LLC à la couche SNDCP, cette primitive comportant des paramètres caractéristiques permettant d'informer la couche SNDCP du fait que les unités de données SN-PDU doivent alors être de taille réduite.

La taille requise pour les unités de données LLC-PDU pourrait être précisée dans les paramètres caractéristiques de ces primitives, ou sinon une valeur par défaut pourrait être supposée.

Ensuite, lorsque la re-sélection de cellule a été effectuée avec succès, la réception par le SGSN d'un message de mise à jour de cellule déclenche l'envoi de primitives « LLGMM-RESUME-REQ » et « LL-STATUS » aux couches correspondantes, afin de cesser de réduire la taille des unités de données LLC-PDU.

Si la re-sélection de cellule ne peut être effectuée, la station mobile envoit un message de signalisation RLC/MAC (le message « Packet Cell Change Failure ») à l'entité BSS contrôlant l'ancienne cellule. La présente invention propose que ceci déclenche alors l'envoi par la couche BSSGP du BSS d'une primitive « GMM-RADIO STATUS » pour informer l'entité GMM de l'échec de re-sélection de cellule. Une nouvelle cause pourrait être introduite à cet effet. Les couches LLC et SNDCP sont alors informées de l'échec de re-sélection de cellule via les primitives « LLGMM-RESUME-REQ » et « LL-STATUS, afin de cesser de réduire la taille des unités de données LLC-PDU.

On notera que la description précédente correspond à un système particulier, en l'occurrence le système GPRS, et à un mode particulier de re-sélection de cellule (en l'occurrence le mode NC2), mais que l'invention n'est pas limitée à un tel système et/ou à un tel mode de re-sélection de cellule. En outre, dans ces exemples, l'invention n'est pas limitée non plus à l'exemple particulier de procédure illustré sur la figure 3. En outre, l'invention n'est pas non plus limitée au cas de re-sélection de cellule, mais s'applique à toute procédure susceptible de perturber le transfert de données, notamment parce qu'une telle procédure impliquerait de très longues re-transmissions si on continuait à segmenter lesdites unités de données selon la taille maximale.

La présente invention a également pour objet, outre un tel procédé, une entité de réseau cellulaire de radiocommunications mobiles, et une station mobile, comportant des moyens de mise en oeuvre d'un tel procédé.

Ainsi, une entité de réseau cellulaire de radiocommunications mobiles comporte essentiellement, pour mettre en oeuvre un procédé suivant l'invention :
- des moyens pour transférer des unités de données de protocole de communication radio de taille réduite, lors de mise en oeuvre, dans le système, de toute procédure susceptible de perturber le transfert de données..

Suiavnt une autre caractéristique, ladite entité comporte en outre:
- des moyens pour segmenter des unités de données de protocole de niveau supérieur en unités de données de protocole de communication radio de taille réduite, lors de mise en oeuvre de telle procédure.

De même, une station mobile comporte essentiellement, pour mettre en oeuvre un procédé suivant l'invention :
- des moyens pour recevoir des unités de données de protocole de communication radio de taille réduite lors de mise en oeuvre, dans le système, de toute procédure susceptible de perturber ledit transfert de données.

Suivant une autre caractéristique, ladite station mobile comporte en outre :
- des moyens pour ré-assembler en unités de données de protocole de niveau supérieur, lesdites unités de données de protocole de communication radio de taille réduite, lors de mise en oeuvre de telle procédure.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour l'optimisation de transfert de données dans un système cellulaire de radiocommunications mobiles, lors de toute procédure mise en oeuvre dans ledit système et suceptible de perturber ledit transfert de données, ce procédé étant **caractérisé en ce que** ledit transfert de données est poursuivi lors de mise en oeuvre de telle procédure, avec une taille réduite pour les unités de données de protocole de communication radio transférées.

2. Procédé selon la revendication 1, **caractérisé en ce que** ladite procédure est une procédure de re-sélection de cellule.

3. Procédé selon l'une des revendications 1 et 2, **caractérisé en ce que** ledit système est de type GPRS, et lesdites unités de données de protocole de communication radio sont constituées par des unités de données de type LLC-PDU (pour « Logical Link Control- Protocol Data Unit » en anglais), obtenues notamment par segmentation d'unités de protocole de niveau supérieur de type N-PDU (pour « Network layer - Protocol Data Unit » en anglais).

4. Entité de réseau cellulaire de radiocommunications mobiles, **caractérisée en ce qu** 'elle comporte, pour mettre en oeuvre un procédé selon l'une des revendications 1 à 3:
- des moyens pour transférer des unités de données de protocole de communication radio de taille réduite, lors de mise en oeuvre de telle procédure.

5. Entité selon la revendication 4, **caractérisée en ce que**, ledit réseau étant de type GPRS, et lesdites unités de données de protocole de communication radio étant constituées par des unités de données de type LLC-PDU (pour « Logical Link Control- Protocol Data Unit» en anglais), obtenues par segmentation d'unités de protocole de niveau supérieur de type N-PDU (pour « Network layer - Protocol Data Unit » en anglais), elle comporte:
- des moyens pour segmenter lesdites unités de données de protocole de niveau supérieur en unités de données de protocole de communication radio de taille réduite, lors de mise en oeuvre de telle procédure.

6. Entité selon la revendication 5, **caractérisée en ce qu'**elle est de type SGSN (pour « Serving GPRS Support Node » en anglais).

7. Station mobile, **caractérisée en ce qu'**elle comporte, pour mettre en oeuvre un procédé selon l'une des revendications 1 à 3:
- des moyens pour recevoir des unités de données de protocole de communication radio de taille réduite, lors de mise en oeuvre de telle procédure.

8. Station mobile selon la revendication 7, **caractérisée en ce que**, ledit système étant de type GPRS, et lesdites unités de données de protocole de communication radio étant constituées par des unités de données de type LLC-PDU (pour « Logical Link Control- Protocol Data Unit » en anglais), obtenues notamment par segmentation d'unités de protocole de niveau supérieur de type N-PDU (pour « Network layer - Protocol Data Unit » en anglais), elle comporte en outre:
- des moyens pour ré-assembler en unités de données de protocole de niveau supérieur, lesdites unités de données de protocole de communication radio de taille réduite, dans le cas de mise en oeuvre de telle procédure.
